# EUROPEAN PATENT SPECIFICATION

(11) **EP 1 696 530 B1**
(45) Date of publication and mention of the grant of the patent: **27.04.2011**
(21) Application number: 06250720.7
(22) Date of filing: 10.02.2006
(51) Int. Cl.: H02G 3/04

(54) **Impact resistant conduit**
Schlagfestes Rohr
Conduit résistant au choc

(30) Priority: 24.02.2005 GB 0503774
(43) Date of publication of application: 30.08.2006
(73) Proprietor: New Chapel Electronics Limited, Fairford, Gloucestershire, GL7 4DS (GB)
(72) Inventor: Andrews, Derek c/o New Chapel Electronics Ltd, Fairford, Gloucestershire, GL7 4DS (GB); Steel, Travis c/o New Chapel Electronics Ltd, Fairford, Gloucestershire, GL7 4DS (GB)
(74) Representative: Hocking, Adrian Niall

(56) References cited:
- US-A- 4 774 043
- US-A- 5 698 055
- US-A1- 2004 222 013

## Description

The present invention relates to an impact resistant conduit, particularly, but not exclusively, for use with electrical wiring.

Exposed electrical wiring, for example forming part of a wiring harness, is presently protected from damage by being housed or sheathed in metal tubing. A typical metal is stainless steel.

However, metal is relatively heavy and, in the case of stainless steel, extremely expensive.

A method for making a reinforced tubular laminate is known from US5699055. However, this method requires more steps, since the flexible elements do not include carbon fibre which is impregnated with resin. Furthermore, the resulting conduit is weaker since the flexible elements are not unidirectionally braided.

The present invention seeks to overcome this problem.

In accordance with a first aspect of the present invention, there is provided an impact resistant conduit for electrical wiring, the conduit being formed from impact resistant material comprising elongate flexible elements which are consolidated to form a homogeneous matrix, said elongate flexible elements including a composite mixture of resin and carbon fibre, the carbon fibre being pre-impregnated with the resin and unidirectionally braided to form an impact-resistant conduit for forming and curing into a desired shape.

Preferable and/or optional features are set forth in claims 2 to 14, inclusive.

In accordance with a second aspect of the invention, there is provided a method of forming an impact resistant conduit, in accordance with the first aspect of the invention, the method comprising the steps of : (a) unidirectionally braiding a plurality of said elongate flexible elements onto a former to form flexible braided material; (b) heating the flexible braided material so that the plurality of elongate elements form a homogeneous matrix, and thus form a unitary impact resistant conduit; and (c) post-heating the unitary impact resistant conduit to soften the material and allow its formation into a desired shape.

Preferable and/or optional features are set forth in claims 16 to 18, inclusive.

The invention will now be more particularly described, by way of example only, with reference to the accompanying drawing, in which :
Figure 1 shows part of apparatus used in a method of forming an impact resistant tube, in accordance with the second aspect of the invention; and
Figure 2 shows a jig used in the method of forming an impact resistant tube.

One embodiment of an impact resistant tube will now be described, by way of example only, with reference to the drawings. The impact resistant tube, having an uninterrupted circumference, is formed from impact resistant thermoplastic material being a composite mixture of carbon fibre, poly-paraphenylene terephthalamide-based (for example Kevlar®) fibre, and resin.

This material is impregnated with the resin, and has been available, although not in the form of elongate flexible elements, from Schappe Ltd. at B.P. 8901800 Charnoz, France under the trade name TPFL®.

The resin is one or more of polyetheretherkeyton (PEEK), polyphenylenesulphide (PPS), polyetherimide (PEI), polyamide (PA) polypropylene (PP); and the fibres are provided in an amount of 40% to 70% fibre volume fraction. No halogens are present.

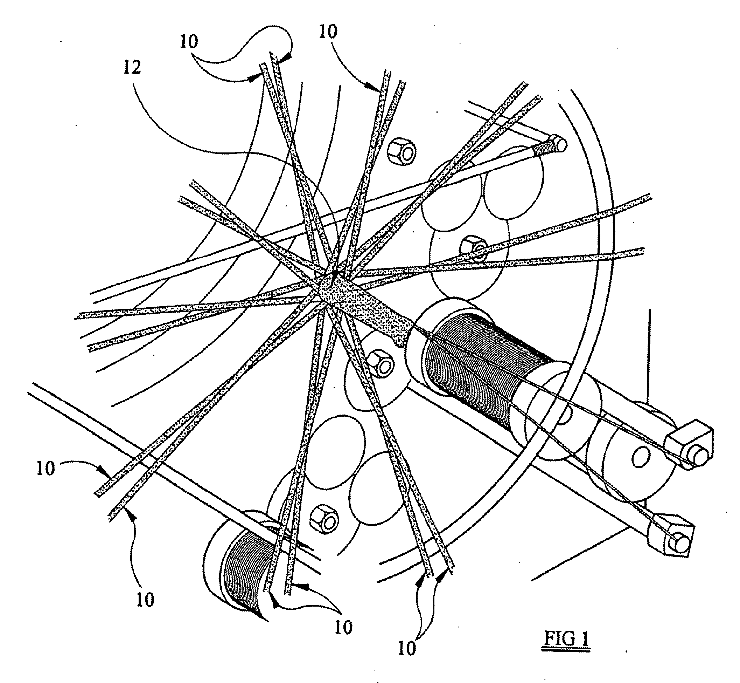

The impact resistant material is initially formed as an elongate flexible element, for example a yarn, tape or thread. Referring to Figure 1, a plurality of the elongate elements 10 is braided unidirectionally. The braiding is initiated, and then a rigid elongate former (not shown) is coaxially inserted, and braiding is completed on the former.

The flexible braided material 12 and former are placed in an oven and heat treated, so that the elongate elements form a homogenous matrix or unitary tube on the former.

The unitary tube is cooled, and the former is removed. The unitary tube is then post-heated to slightly soften the impact resistant material to allow post-forming.

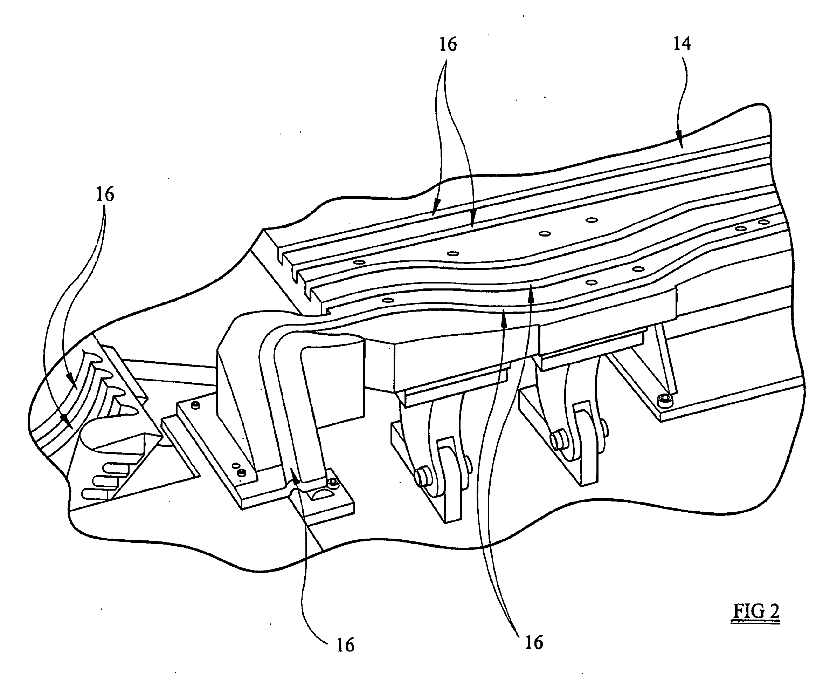

As shown in Figure 2, a jig 14 is utilised to post-form the unitary tube. Once softened, the unitary tube is placed in a channel 16 of the jig corresponding to a desired shape of impact resistant tube. The unitary tube is held in the jig 14 until the material has cooled. Once cooled, the impact resistant tube assumes a rigid hollow structure which retains its shape.

In a second embodiment of a method for forming the impact resistant tube, unidirectional braiding of a plurality of the elongate elements is again initiated. A former is again coaxially inserted. However, the former is an inflatable and deflatable bladder-type former. Unidirectional braiding is completed on the deflated former.

The flexible braided material and deflated former are placed in a mould which defines the finished shape of the impact resistant tube. The former is inflated, so that the braided material is pressed against the internal sides of the mould. The mould together with the braided material and inflated former are heated in an oven. The yarns or threads again form a homogenous matrix or unitary tube along the former.

The mould is cooled, and the former is deflated and removed from the unitary tube. The impact resistant conduit is thus formed and shaped simultaneously, or substantially simultaneously, and without the need for a separate jig.

One or both formers, and thus the finished tube, can have a round, oval or substantially quadrilateral cross-section. Other cross-sectional shapes are possible.

The tube typically has diameters which range from 6 mm to 50 mm, and with a wall thickness that ranges from 0.3 mm to 5.0 mm.

Shapes such as two dimensional and three dimensional bends, flairs and belling can be imparted to the tube by the methods described above without reducing structural integrity. Consequently, complex and tortuous paths can be formed without weakening the tube.

Once cured, the tube maintains structural integrity up to 65% crush resistance; is 75% to 80% lighter by volume than stainless steel; and is heat resistant in the range of-150°C to 350°C, though more preferable operating parameters are -70°C to 260°C.

The tube exhibits excellent flame, smoke and toxicity resistance as well as being resilient to fuel, oil, solvent and chemical exposure.

An interior coating can be applied to the former before winding the impact resistant material. The coating can be a abrasion reducing coating, such as PTFE; an electrical and/or EMC screening coating; and/or a fluid impermeable coating. More specifically, the fluid impermeable coating can be a liquid impermeable coating.

An exterior coating may alternatively, or additionally, be provided. The coating can also be an abrasion resistant lining, such as PTFE. Alternatively, the coating can be plating, which easily takes to the impact resistant material. The plating can be, for example, gold, nickel, copper, zinc or any other plating suitable for a given application.

The exterior coating can also provide electrical and/or EMC screening.

The tube can be integrated as part of a Connector adaptor, Backshell, harness boot; and/or primary conduit. This is particularly beneficial in protecting an exposed electrical harness on, for example, the undercarriage of an aeroplane which is especially vulnerable to projectile impact during take-off and landing. Furthermore, due to the light weight of the tube, overall weight is reduced in comparison to traditional metal impact resistant tubing.

The impact resistant tube is stiff, reducing the need for brackets and 'p' clips supporting the wiring or harness.

The tube can also be utilised, for example, in the masts of ships due to its high rigidity and low weight.

In use, electrical wiring may be fully enclosed by the impact resistant tube, or may enter and exit the tube as required.

Although the impact resistant tube has been described as being applicable to aircraft and ships, it can be utilised on any transport, or indeed in any area, where exposed electrical wiring is subject to projectile damage.

Other types of conduit, as alternatives to a tube, can be formed from the impact resistant material. The conduit may have a non-continuous circumference, for example having a U- or C- shaped cross-section.

Although Kevlar® fibres are used in conjunction with the carbon fibres, it may be possible to dispense with the Kevlar® fibres, or utilise alternative fibres, such as R-Glass.

It is thus possible to provide an impact resistant conduit which is more cost-effective to produce than a traditional stainless steel protective tube or conduit, which exhibits better impact resistance, and which is lighter.

## Claims

1. An impact resistant conduit for electrical wiring, the conduit being formed from impact resistant material comprising elongate flexible elements (10) which are consolidated to form a homogenous matrix, said elongate flexible elements including a composite mixture of resin and carbon fibre, the carbon fibre being pre-impregnated with the resin and unidirectionally braided to form an impact-resistant conduit for forming and curing into a desired shape.

2. An impact resistant conduit as claimed in claim 1, wherein the conduit is a hollow tube having an uninterrupted circumference.

3. An impact resistant conduit as claimed in claim 1 or claim 2, wherein the resin of the impact resistant material is polyetheretherkeyton (PEEK), polyphenylenesulphide (PPS), polyetherimide (PEI), polyamide (PA), polypropylene (PP), or a combination thereof.

4. An impact resistant conduit as claimed in any one of the preceding claims, wherein the said material further comprises poly-paraphenylene terephthalamide-based fibre.

5. An impact resistant conduit as claimed in any one of the preceding claims, wherein the or both kinds of said fibres of the said material are in an amount of 40% to 70% fibre volume fraction.

6. An impact resistant conduit as claimed in any one of the preceding claims, wherein the conduit is 65% crush resistant.

7. An impact resistant conduit as claimed in any one of the preceding claims, wherein the conduit is 75% to 80% lighter than stainless steel by volume.

8. An impact resistant conduit as claimed in any one of the preceding claims, wherein the conduit is heat resistant to in the range of -150°C to 350°C.

9. An impact resistant conduit as claimed in claim 8, wherein the conduit is heat resistant in the range of -70°C to 260°C.

10. An impact resistant conduit as claimed in any one of the preceding claims, wherein the tube is shape formable.

11. An impact resistant conduit as claimed in any one of the preceding claims, further comprising an interior coating and/or an exterior coating.

12. An impact resistant conduit as claimed in claim 11, wherein the interior coating is an abrasion reducing coating; an electrical and/or EMC screening coating; and/or a fluid impermeable coating.

13. An impact resistant conduit as claimed in claim 11 or claim 12, wherein the exterior coating is plating.

14. An impact resistant conduit as claimed in any one of claims 11 to 13, wherein the exterior coating provides electrical and/or EMC screening.

15. A method of forming an impact resistant conduit as claimed in any one of claims 1 to 14, comprising the steps of :
a. unidirectionally braiding a plurality of said elongate flexible elements (10) onto a former to form flexible braided material (12);
b. heating the flexible braided material (12) so that the plurality of elongate elements (10) form a homogeneous matrix, and thus form a unitary impact resistant conduit; and
c. post-heating the unitary impact resistant conduit to soften the material and allow its formation into a desired shape.

16. A method as claimed in claim 15, wherein the former is a rigid former, and further comprising a step (d), between steps (b) and (c), of cooling the unitary conduit, removing the rigid former, and then post-heating the unitary conduit.

17. A method as claimed in claim 15, wherein the former is an inflatable and deflatable former, and, in step (b), the braided impact resistant material and former are positioned in a mould, so that steps (b) and (c) occur simultaneously or substantially simultaneously.

18. A method as claimed in claim 17, wherein, in step (a), the former is deflated, and in steps (b) and (c), the former is inflated.

## Patentansprüche

1. Schlagfestes Rohr für elektrische Verdrahtung, wobei das Rohr aus einem schlagfesten Werkstoff geformt ist, der längliche flexible Elemente (10) umfasst, die verfestigt sind, um eine homogene Matrix zu bilden, wobei die länglichen flexiblen Elemente ein Verbundgemisch aus Harz und Kohlefaser einschließen, wobei die Kohlefaser mit dem Harz vorimprägniert und in einer Richtung geflochten ist, um ein schlagfestes Rohr zum Formen und Aushärten zu einer gewünschten Form zu bilden.

2. Schlagfestes Rohr nach Anspruch 1, wobei das Rohr eine hohle Röhre ist, die einen ununterbrochenen Umfang hat.

3. Schlagfestes Rohr nach Anspruch 1 oder Anspruch 2, wobei das Harz des schlagfesten Werkstoffs Polyetheretherketon (PEEK), Polyphenylsulfid (PPS), Polyetherimid (PEI), Polyamid (PA), Polypropylen (PP) oder eine Kombination derselben ist.

4. Schlagfestes Rohr nach einem der vorhergehenden Ansprüche, wobei der Werkstoff ferner eine Faser auf Polyparaphenylen-Terephthalamid-Basis umfasst.

5. Schlagfestes Rohr nach einem der vorhergehenden Ansprüche, wobei die oder beide Arten der Fasern des Werkstoffs in einer Menge von 40 % bis 70 % Faservolumenanteil vorliegen.

6. Schlagfestes Rohr nach einem der vorhergehenden Ansprüche, wobei das Rohr zu 65 % druckfest ist.

7. Schlagfestes Rohr nach einem der vorhergehenden Ansprüche, wobei das Rohr nach dem Volumen 75 % bis 80% leichter als rostfreier Stahl ist.

8. Schlagfestes Rohr nach einem der vorhergehenden Ansprüche, wobei das Rohr in dem Bereich von -150°C bis 350°C hitzebeständig ist.

9. Schlagfestes Rohr nach Anspruch 8, wobei das Rohr in dem Bereich von -70°C bis 260°C hitzebeständig ist.

10. Schlagfestes Rohr nach einem der vorhergehenden Ansprüche, wobei die Röhre umformbar ist.

11. Schlagfestes Rohr nach einem der vorhergehenden Ansprüche, das ferner eine innere Beschichtung und/oder eine äußere Beschichtung umfasst.

12. Schlagfestes Rohr nach Anspruch 11, wobei die innere Beschichtung eine abriebmindernde Beschichtung, eine Beschichtung zur elektrischen und/oder elektromagnetischen Verträglichkeitsabschirmung und/oder eine fluidundurchlässige Beschichtung ist.

13. Schlagfestes Rohr nach Anspruch 12 oder Anspruch 12, wobei die äußere Beschichtung eine Metallisierung ist.

14. Schlagfestes Rohr nach einem der Ansprüche 11 bis 13, wobei die äußere Beschichtung eine elektrische und/oder elektromagnetische Verträglichkeitsabschirmung gewährleistet.

15. Verfahren zum Formen eines schlagfesten Rohrs nach einem der Ansprüche 1 bis 14, das die folgenden Schritte umfasst:
a. das Flechten mehrerer der länglichen flexiblen Elemente (10) auf einen Former, um einen flexiblen geflochtenen Werkstoff (12) zu bilden,
b. das Erhitzen des flexiblen geflochtenen Werkstoffs (12), so dass die mehreren flexiblen Elemente (10) eine homogene Matrix bilden und folglich ein einheitliches schlagfestes Rohr bilden, und
c. das Nacherhitzen des einheitlichen schlagfesten Rohrs, um den Werkstoff zu erweichen und seine Formung zu einer gewünschten Form zu ermöglichen.

16. Verfahren nach Anspruch 15, wobei der Former ein starrer Former ist, und das ferner einen Schritt (d), zwischen den Schritten (b) und (c), des Kühlens des einheitlichen Rohrs, des Entfernens des starren Formers und des anschließenden Nacherhitzens des einheitlichen Rohrs umfasst.

17. Verfahren nach Anspruch 15, wobei der Former ein aufblasbarer und ablassbarer Former ist und, in Schritt (b), der geflochtene schlagfeste Werkstoff und der Former in einer Form angeordnet werden, so dass die Schritte (b) und (c) gleichzeitig oder im Wesentlichen gleichzeitig stattfinden.

18. Verfahren nach Anspruch 17, wobei, in Schritt (a), der Former abgelassen wird und, in den Schritten (b) und (c), der Former aufgeblasen wird.

## Revendications

1. Conduit résistant aux chocs pour un câblage électrique, le conduit étant formé à partir d'un matériau résistant aux chocs, comprenant des éléments allongés flexibles (10) consolidés de sorte à former une matrice homogène, lesdits éléments allongés flexibles englobant un mélange composite de résine et de fibres de carbone, les fibres de carbone étant pré-imprégnées de résine et tressées de manière unidirectionnelle pour former un conduit résistant aux chocs en vue de son formage et de son durcissement en une forme voulue.

2. Conduit résistant aux chocs selon la revendication 1, dans lequel le conduit est un tube creux ayant une circonférence ininterrompue.

3. Conduit résistant aux chocs selon les revendications 1 ou 2, dans lequel la résine du matériau résistant aux chocs est du polyétheréthercétone (PEEK), du polysulfure de phénylène (PPS), du polyétherimide (PEI), du polyamide (PA), du polypropylène (PP) ou une combinaison correspondante.

4. Conduit résistant aux chocs selon l'une quelconque des revendications précédentes, dans lequel ledit matériau comprend en outre une fibre à base de polyparaphénylène téréphtalamide.

5. Conduit résistant aux chocs selon l'une quelconque des revendications précédentes, dans lequel le ou les deux types desdites fibres dudit matériau sont présents dans une quantité représentant 40% à 70% de la fraction en volume des fibres.

6. Conduit résistant aux chocs selon l'une quelconque des revendications précédentes, dans lequel le conduit présente une résistance à l'écrasement de 65%.

7. Conduit résistant aux chocs selon l'une quelconque des revendications précédentes, dans lequel le conduit a un poids en volume inférieur de 75% à 80% à celui de l'acier inoxydable.

8. Conduit résistant aux chocs selon l'une quelconque des revendications précédentes, dans lequel le conduit présente une résistance à la chaleur comprise dans l'intervalle allant de -150°C à 350°C.

9. Conduit résistant aux chocs selon la revendication 8, dans lequel le conduit présente une résistance à la chaleur comprise dans l'intervalle allant de -70°C à 260°C.

10. Conduit résistant aux chocs selon l'une quelconque des revendications précédentes, dans lequel le tube se prête à un formage.

11. Conduit résistant aux chocs selon l'une quelconque des revendications précédentes, comprenant en outre un revêtement interne et/ou un revêtement externe.

12. Conduit résistant aux chocs selon la revendication 11, dans lequel le revêtement interne est un revêtement à réduction de l'abrasion ; un revêtement de blindage électrique et/ou électromagnétique ; et/ou un revêtement imperméable aux fluides.

13. Conduit résistant aux chocs selon les revendications 11 ou 12, dans lequel le revêtement externe est un placage.

14. Conduit résistant aux chocs selon l'une quelconque des revendications 11 à 13, dans lequel le revêtement externe assure un blindage électrique et/ou électromagnétique.

15. Procédé de formation d'un conduit résistant aux chocs selon l'une quelconque des revendications 1 à 14, comprenant les étapes ci-dessous :
a. tressage unidirectionnel de plusieurs desdits éléments allongés flexibles (10) sur un moyen de formage pour former un matériau tressé flexible (12) ;
b. chauffage du matériau tressé flexible (12), de sorte que les plusieurs éléments allongés (10) forment une matrice homogène, pour former ainsi un conduit d'une seule pièce résistant aux chocs ; et
c. post-chauffage du conduit d'une seule pièce résistant aux chocs pour ramollir le matériau et permettre sa formation en une forme voulue.

16. Procédé selon la revendication 15, dans lequel le moyen de formage est un moyen de formage rigide, et comprenant en outre une étape (d) entre les étapes (b) et (c), de refroidissement du conduit d'une seule pièce et de retrait du moyen de formage rigide avant un post-chauffage du conduit d'une seule pièce.

17. Procédé selon la revendication 15, dans lequel le moyen de formage est un moyen de formage gonflable et dégonflage, le matériau tressé résistant aux chocs et le moyen de formage étant positionnés, lors de l'étape (b) dans un moule, de sorte que les étapes (b) et (c) sont effectuées de manière simultanée ou pratiquement simultanée.

18. Procédé selon la revendication 17, dans lequel le moyen de formage est dégonflée lors de l'étape (a), le moyen de formage étant gonflé lors des étapes (b) et (c).
